# EUROPEAN PATENT SPECIFICATION

(11) **EP 4 221 957 B1**
(45) Date of publication and mention of the grant of the patent: **22.04.2026**
(21) Application number: 21791015.7
(22) Date of filing: 30.09.2021
(51) Int. Cl.: B29C 64/118, B33Y 80/00, B63B 7/04, F03D 1/06

(54) **A METHOD FOR PRODUCING A SHELL-LIKE OR PLATE LIKE SUPPORTING STRUCTURE**
VERFAHREN ZUR HERSTELLUNG EINER SCHALEN- ODER PLATTENFÖRMIGEN TRAGSTRUKTUR
PROCÉDÉ POUR LA PRODUCTION D'UNE STRUCTURE DE SUPPORT DE TYPE COQUE OU DE TYPE PLAQUE

(30) Priority: 02.10.2020 IT 202000023260
(43) Date of publication of application: 09.08.2023
(73) Proprietor: Nugae S.r.l., 98040 Roccavaldina (ME) (IT)
(72) Inventor: BELVISI, Francesco, 90141 Palermo (IT); BUSCEMI, Alessandro, 90141 Palermo (IT); MANGIAPANE, Antonio, 90141 Palermo (IT)
(74) Representative: Buzzi, Notaro & Antonielli d'Oulx S.p.A.
(86) International application number: PCT/IB2021/058979
(87) International publication number: WO 2022/070121

(56) References cited:
- WO-A1-2016/177752
- WO-A1-2017/092766
- WO-A1-2020/081645
- RO-A1- 132 984
- US-B2- 10 787 240
- ANONYMOUS: "The World's First 3D Printed Jet Aircraft [VIDEO]", 4 August 2020 (2020-08-04), XP093148343, Retrieved from the Internet <URL:https://www.javelin-tech.com/blog/2015/11/3d-printed-jet-aircraft-video/> [retrieved on 20240405]

## Description

### Field of the invention

The present invention relates to methods for providing shell-like or plate-like supporting structures, such as hulls or parts of watercraft or aircraft structures, in particular aircraft fuselage structures or wing or tail structures, or motor-vehicle bodies or their subassemblies, or again for example propeller blades or wind rotor blades, and supporting structures in general that have relatively thin walls, where it is necessary to combine characteristics of structural strength with characteristics of a high degree of lightness. Another possible application regards the dies or moulds used in the manufacture of structures of the type referred to above, for example dies for the manufacture of structures made of composite material.

In the present description and in the annexed claims the expression "shell-like or plate-like supporting structure" is used to refer to a structure constituted by one or more relatively thin panels, configured in the form of a closed or open shell, or also in the form of a plane plate, capable of performing a load-bearing function.

The invention finds particularly advantageous application in the production of shell-like or plate-like supporting structures that must also present hydrodynamic or aerodynamic characteristics, suited to movement in water or in air, such as watercraft hulls, aircraft structures, or motor-vehicle structures, and in general any other structure of the type referred to.

### Prior art

The conventional technique used for providing shell-like or plate-like supporting structures of large dimensions in general entails long and complex operations. To guarantee a greater stiffness and strength of such structures, which are characterized by walls of relatively small thickness, a lattice of stiffening ribs is usually provided, which can be glued, screwed, jointed, nailed, or riveted to the surfaces of the shells. Such secondary structures may in some cases jeopardise the external finish of the surfaces, which normally should be characterized by smooth and fair surfaces. Large structures made of composite material, such as those of the hulls of watercraft, are obtained for example using male or female dies, which are constituted by a framework covered with foamed panels, deposited on which are the carbon fibres or glass fibres that constitute the material of the final structure. In this case, where structures are to be provided that have reinforcement ribs, it is necessary to shape the die accordingly. However, it is problematical to obtain in this way ribs characterized by cross sections that present particular configurations or, for example, a hollow configuration. For hulls the shells of which are obtained using metal materials techniques of forming of metal plates are instead employed: the metal plates are bent, rolled, thermoformed, and then jointed to the reticular structures that constitute the skeleton of the hull itself. Similar techniques of construction are normally adopted for the creation of various aircraft components (fuselages, cockpit cells, wing surfaces, tails) or else for building motor-vehicle bodies. Shell-like or plate-like supporting structures of large dimensions are also obtained, for example, by means of gluing of slats or strips on supporting ribs using an extremely wide range of materials (for example, metal or wood). For manufacturing shell-like or plate-like supporting structures with stiffening ribs, there exist further techniques that range from milling of semi-finished products made of metal material (having thicknesses of up to some centimetres) to the so-called fibre-placement technique, whereby it is possible to spread long carbon fibres over a die to obtain objects made of composite material. For objects having a geometry prevalently presenting axial symmetry, the so-called thread-winding technique is for example used, whereby it is possible to wind a carbon fibre around a die that is set in rotation by a spindle. With this type of manufacturing process it is possible to obtain shell-like or plate-like supporting structures, stiffened by ribs with full section, with maximum dimensions of approximately one metre. Typically, all these methods are used to produce structures of the so-called isogrid or anisogrid type, which, by virtue of their lightness and stiffness, are routinely used for creating shell-like structures of tanks of large dimensions or else for producing objects in the aerospace sector. There moreover exist other techniques that can be used for manufacturing ribbed panels of small dimensions using dies made of metal or sand used for die-casting of objects made of thermoplastic or metal material, respectively.

In recent years, various additive-manufacturing technologies have been developed with increasing success, in particular for the production of objects of relatively small size. The term "additive manufacturing" is used herein to refer to a wide range of techniques, where an object is manufactured starting from 3D computer models by adding layers on top of one another (unlike traditional methodologies where stock is removed and where milling machines or lathes are employed) using metal materials, plastic materials, or composite materials. A specific type of additive manufacturing is the FDM (Fused Deposition Modelling) technique, where an object is created layer by layer with the use of a dispensing head that deposits material in a continuous way along a pre-set path.

Up to the present, however, additive-manufacturing technology has not found concrete application in the production of large-sized shell-like or plate-like supporting structures of the type to which the present invention refers, mainly on account of the impossibility of achieving simultaneously the characteristics of lightness and strength that are necessary in structures of this sort, in particular in the case of shell-like or plate-like supporting structures for hulls of watercraft, aircraft structures, or motor-vehicle structures and in general for any other structure of the type discussed above.

A method according to the preamble of claim 1 is known from WO 2017/092766 A1. Similar solutions are known from RO 132 984 A1, WO 2020/081645 A1 and WO 2016/177752 A1 as well as from video "The World's First 3D Printed Jet Aircraft", 4 August 2020 (2020-08-04).

### Object of the invention

The object of the present invention is to propose new techniques of production for shell-like or plate-like supporting structures of large dimensions, such as hulls of watercraft or aircraft structures or motor-vehicle structures, that will prove considerably simpler and faster than conventional techniques used up to the present, at the same time guaranteeing the necessary features of strength and lightness of the structure obtained.

A further object of the invention is to propose new techniques of production of shell-like or plate-like supporting structures of large dimensions that will guarantee that smooth and fair surfaces are obtained, suited for application to the hulls of watercraft or aircraft structures or motor-vehicle structures, or again propeller blades or wind rotor blades, where it is necessary to obtain surfaces with good hydrodynamic or aerodynamic characteristics.

A further object of the invention is to achieve the aforesaid aims with techniques that will allow for the use of equipment characterized by high operating flexibility, in the sense of being readily adaptable to providing different structures without the need to modify the manufacturing equipment and consequently with a considerable reduction in the production costs.

### Summary of the invention

With a view to achieving one or more of the aforesaid objects, the subject of the invention is a method for producing a shell-like or plate-like supporting structure of the type referred to above, having the features of claim 1.

Further preferred features are indicated in the dependent claims.

Further specific applications of the present invention refer to shell-like or plate-like supporting structures for aircraft, for example for an aircraft fuselage or a wing or tail of an aircraft, or for motor-vehicle bodies or their subassemblies.

A further particularly advantageous application of the method according to the invention regards propeller blades or wind rotor blades.

It is evident, however, that the invention is of general application and can be advantageously used in the production of any shell-like or plate-like supporting structure in which it is necessary to obtain good characteristics of lightness and structural strength, with simple and fast operations and with the use of equipment readily adaptable to different applications.

### Detailed description of preferred embodiments

Further characteristics and advantages of the invention will emerge from the ensuing description with reference to the annexed drawings, which are provided purely by way of non-limiting example and in which:
- Figure 1 is a perspective sectioned view of a boat hull obtained using the method according to the invention;
- Figure 2 is a perspective view of a wing profile obtained using the method according to the invention;
- Figure 3 is a schematic perspective view of a motor-vehicle body including a panel obtained using the method according to the invention;
- Figure 4 is a perspective view that provides a schematic illustration of application of the method according to the invention to the production of a thin panel, of large dimensions, with a lattice of stiffening ribs;
- Figure 5 is a perspective view that shows the panel represented in Figure 4 from the side of the panel presenting a smooth surface;
- Figure 6 is a cross-sectional view at an enlarged scale of the panel illustrated in Figures 4 and 5;
- Figures 7-24 are perspective views that illustrate schematically different configurations of a ribbed panel obtained in different embodiments of the method according to the invention;
- Figures 25 and 26 are schematic perspective views that illustrate two further embodiments of the method according to the invention that can be applied to obtain further configurations of shell-like structures;
- Figure 27 is a perspective view of a detail of a stiffening rib of a panel, which shows an embodiment of the method where the cavity of the rib is filled with a resin;
- Figure 28 is a perspective view of a detail of a stiffening rib of a panel, which shows insertion of a reinforcement fibre through the cavity of the rib;
- Figure 29 is a further schematic perspective view that shows use of the cavities of the stiffening ribs for the passage of cables or service ducts or as ventilation ducts;
- Figures 30-33 are further perspective views of details of the panels constituting a structure obtained using the method according to the invention, where the cavities of the stiffening ribs of the panels are used for insertion of elements of connection between the panels; and
- Figures 34 and 35 are schematic perspective views that illustrate further embodiments.

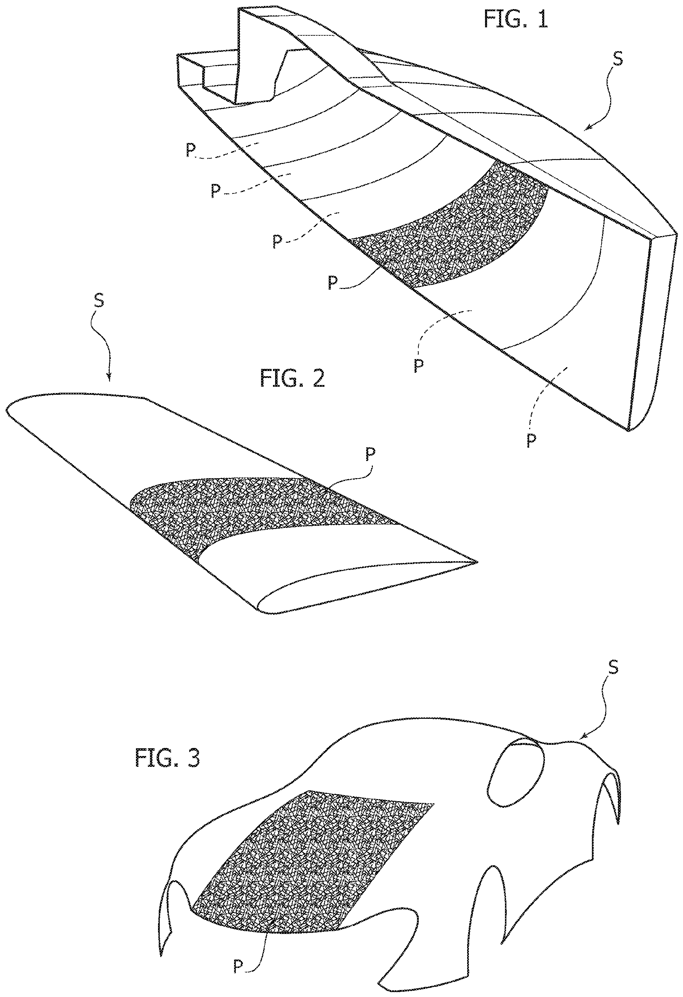

Figures 1-3 show three examples of shell-like supporting structures, of large dimensions, which can be obtained using the method according to the present invention. Figure 1 refers to the case of a shell-like structure S of a hull for a watercraft, in the specific case a racing boat. Figure 2 refers to the case of a wing or tail of an aircraft. Figure 3 refers to the case of a motor-vehicle body, in particular a sports car.

In all of the aforesaid examples, there is the need to provide shell-like supporting structures that will present the necessary characteristics of structural strength, but that at the same time are extremely light and suited to configuring bodies with the necessary hydrodynamic or aerodynamic characteristics.

In all the aforesaid cases, the shell-like supporting structure, denoted as a whole by S, is constituted by one or more panels P, which are connected together and are obtained using the method that will be described hereinafter, with a curved configuration having a single or double curvature and with a lattice of stiffening ribs on the inner face of the panel, i.e., on the side of the concavity of the panel.

Figure 1 shows a perspective view sectioned according to a vertical longitudinal plane, visible in which is just one half of the hull and the superstructure thereof. One of the panels P is illustrated with its inner surface bearing a lattice of stiffening ribs. The remaining panels P are represented only schematically for convenience of illustration, but also these are to be configured with a lattice of stiffening ribs, according to what will be described in greater detail in what follows.

In the case of Figure 2, which refers to a wing or tail of an aircraft, for convenience of illustration a single panel P has been represented, but of course the entire structure S illustrated in Figure 2 is to be understood as being defined by a plurality of panels P connected together. As will be seen in what follows, it is not even ruled out that the structure of the type illustrated in Figure 2 can be made of a single piece using the method according to the invention. Of course, also in the case of the structure S illustrated in Figure 2, the lattice of the stiffening ribs is provided on the inner face of the panel P, the outer face having a smooth surface suited to obtaining the desired aerodynamic features. The same applies to the panel P forming part of the motor-vehicle body illustrated in Figure 3.

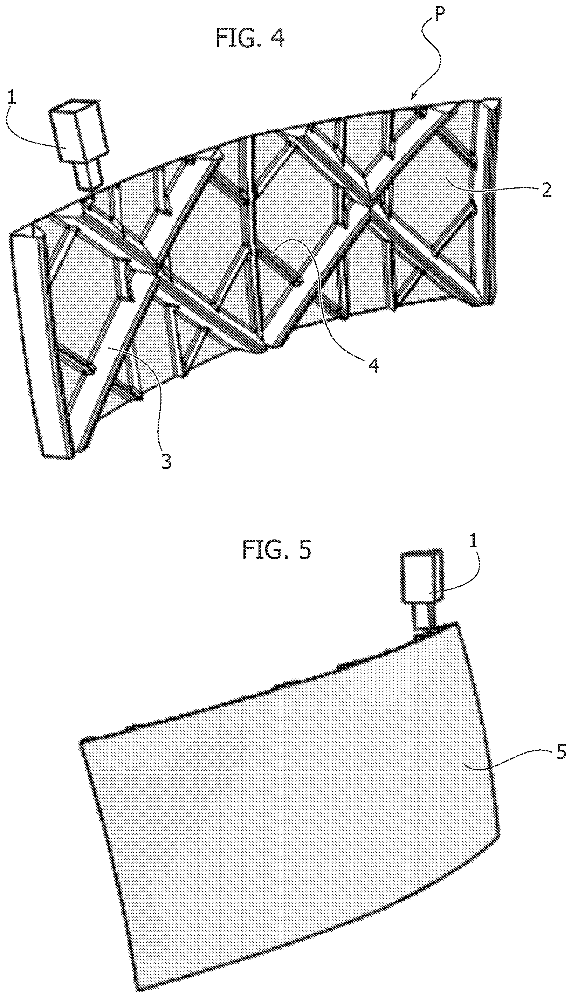

Figures 4 and 5 are schematic perspective views of a panel P obtained using the method according to the invention. This method envisages the use of an additive-manufacturing technology in order to obtain, layer by layer, the configuration of the panel P illustrated in Figures 4 and 5.

The specific example illustrated refers to adoption of an FDM (Fused Deposition Modelling) technique that envisages the use of a dispensing head 1 that deposits a continuous thread of the material that is to constitute the panel (for example, metal material, or polymeric material, or composite material, or cementitious material, or ceramic material). Each layer of the panel P is obtained with a movement of the dispensing head 1 along a pre-set path, as will be described in greater detail in what follows, in order to define a panel P with a smooth outer face (Figure 5) and an inner face bearing a lattice of stiffening ribs.

The additive-manufacturing technique, and in particular the FDM technique, is in itself of a known type. For this reason, the details regarding the machines used for its application are here omitted since they may be of any known type. Elimination of these details from the drawings moreover renders the latter more readily and more easily understandable.

It should moreover be noted that the FDM technique is here indicated merely as preferred solution, without excluding adoption of any other additive-manufacturing technology, for example via powder deposition.

With reference now to the preferred example of embodiment illustrated in Figures 4 and 5, the panel P is obtained with its inner face bearing a lattice of main ribs 3 and a further lattice of auxiliary ribs 4, which extends in the areas 2 delimited between the main ribs 3. Once again with reference to the preferred example of embodiment illustrated here, the dimension of the main ribs 3 in the direction orthogonal to the face of the panel P is greater than the dimension of the auxiliary ribs 4. As already mentioned, the panel may be provided with more than two dimensional orders of ribs. For instance, it is possible to provide a tertiary lattice of ribs between the secondary ribs and further dimensional suborders of ribs.

The configuration and arrangement of the ribs 3, 4 may vary widely according to the desired characteristics of strength of the panel P. The geometry of the ribs can in particular be designed and optimized by using numeric-modelling techniques.

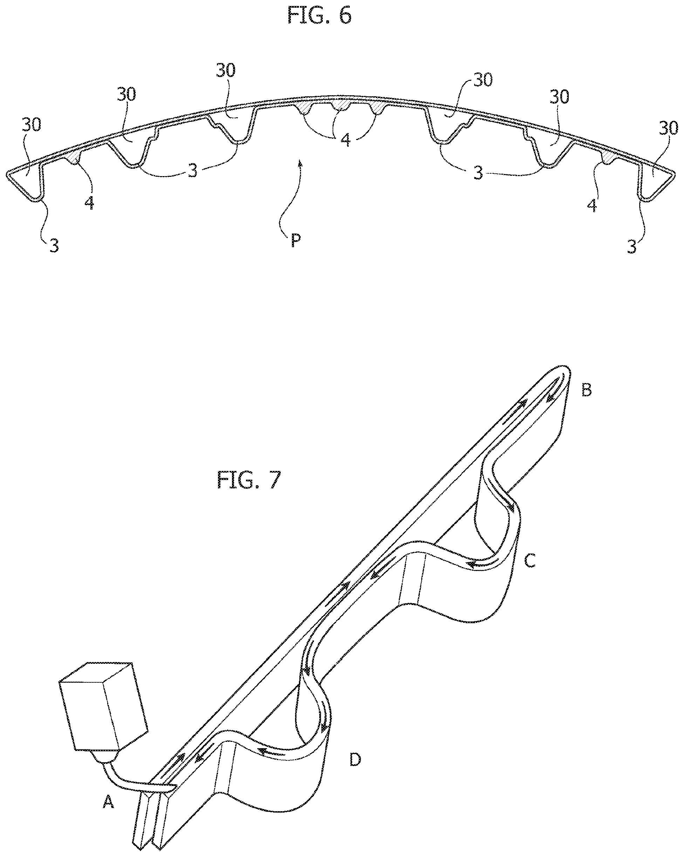

Once again with reference to Figures 4 and 5 and also to Figure 6, which is a cross-sectional illustration of the panel P in a horizontal plane (with reference to the drawings), the auxiliary ribs 4 are full ribs, whereas the main ribs 3 are hollow ribs, each having a cavity 30.

According to a further preferred characteristic of the invention, the ribs of the panel P are made of a single piece with the panel, simultaneously with forming of the panel using an additive-manufacturing technology.

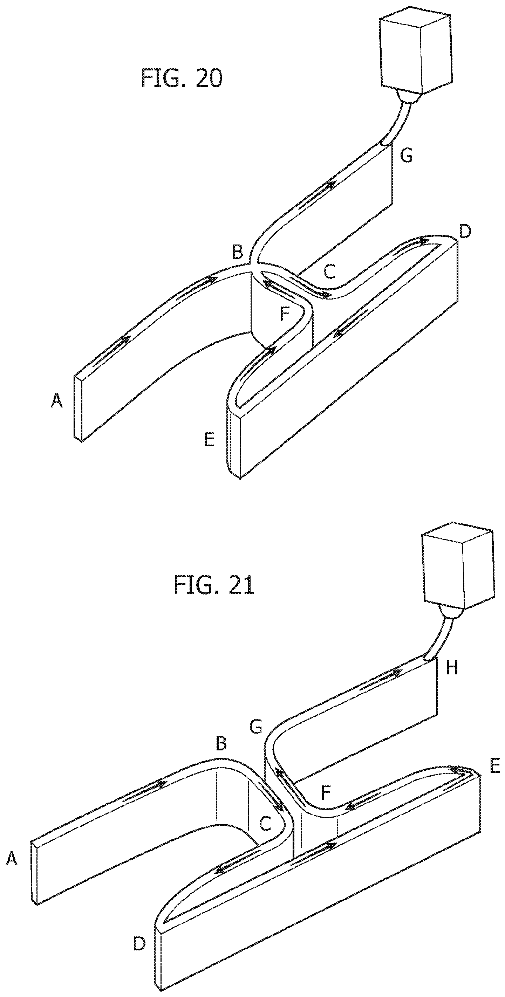

Figures 7-24 show different techniques of deposition of the continuous thread, corresponding to different modes of moving of the dispensing head 1 of the FDM machine and/or to different configurations of the stiffening ribs.

Figure 7 refers to a mode whereby the dispensing head 1 moves in a plane X-Y, for each level Z envisaged, depositing a thread of the material that is to constitute the panel according to a closed-loop path defining the profile of the cross section of the piece, with a forward stretch (from A to B) that defines the smooth outer face of the panel and a return stretch (from B to A) in which the dispensing head 1 deposits a second thread, adjacent to the first except in undulated portions C, D, which are to define the hollow stiffening ribs on the inner face of the panel P. Once one layer is completed, the head 1 deposits the next layer by repeating the same path. In this way, the panel P is obtained, guaranteeing a perfect continuity of the finish both of the smooth outer face and of the inner face bearing the hollow stiffening ribs.

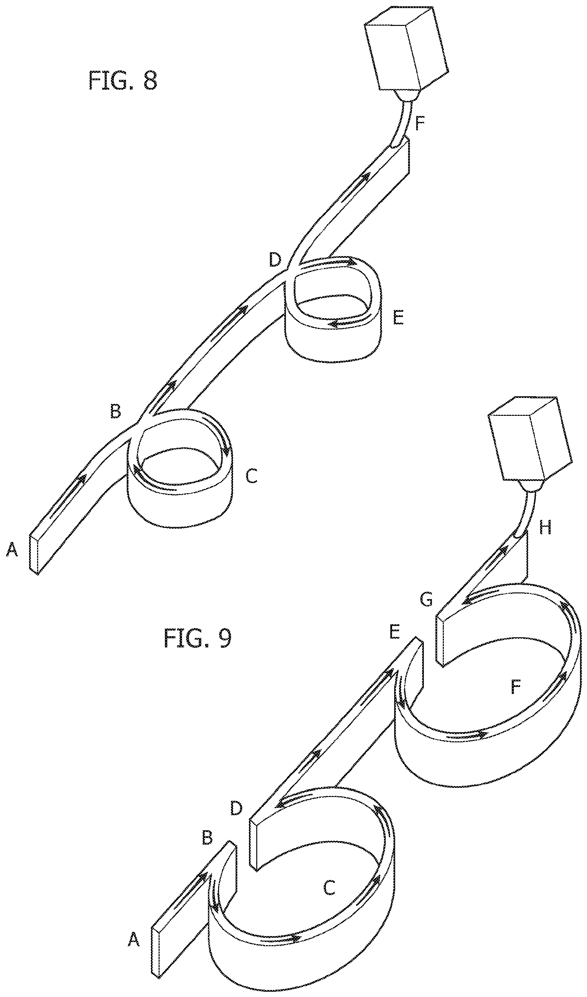

Figure 8 describes a second methodology in which the successive layers of the panel P are obtained by a movement of the dispensing head 1 along one and the same path, back and forth in the two opposite directions (from A to F and then from F to A). The path includes, at the points B and D, loop-shaped stretches C and E that define the hollow stiffening ribs on the inner face of the panel. Following upon movement of the head 1, there occurs overlaying of the portions of thread corresponding to the start and end of each loop.

A first advantage of this second methodology consists in the possibility of providing structures with the wall of the shell having a thickness exactly equal to that of the thread deposited and hence having a thickness smaller than that of structures that can be obtained using the method illustrated in Figure 7. The pieces obtained using the method represented in Figure 8, given the same shape and dimensions, are thus lighter than the ones that can be obtained using the method of claim 7. Moreover, since the times between two successive passes of the dispensing head are halved, it is possible to keep the threads relatively hotter and increase their adhesion during the step of gradual cooling of the piece (curing). The greater adhesion between the layers enables improvement of the characteristics of strength of the pieces, above all in the directions that are intrinsically weaker as a result of the manufacturing process (for example, in the direction Z). In these directions, in fact, there may be phenomena of de-lamination between the layers on account of poor adhesion between them. Notwithstanding the undoubted advantages of the methodology represented in Figure 8 over the one represented in Figure 7, it is necessary on the other hand to consider that the method of Figure 8 leads to obtaining a structure having an outer surface that presents a discontinuity of shape at the points B and D. This aspect may, however, be at least partially mitigated by the fact that at the points B and D approximately twice the amount of the material is deposited (during formation of one and the same layer at a given height along Z). This material is subsequently compressed by the new thread that is deposited during the next pass of the dispensing head (to form the next layer). This compression and expansion of the first layer, which is still hot and soft, in fact enables partial compensation of the trough formed by the depression forming in the outer face of the structure at the points B and D. In general, in the case of the method represented in Figure 8, the deposition paths need always to be closely studied through an optimization process that will take into account the geometries, paths, and thicknesses of the thread to be deposited. It is moreover possible to correct further the effect of the aforesaid irregularities of shape by applying covering layers (for example, made of composite material) on the outer face of the shell, by means of further processes after the panel P has been obtained.

The methodology illustrated in Figure 9 envisages that the dispensing head 1 forms each layer by moving alternately first forwards in the direction from a point A to a point H, and then back from a point H to a point A, following the path illustrated. In this case, on the inner face of the panel hollow stiffening ribs are obtained, of large dimensions, by getting the dispensing head to follow the loop-shaped paths B-C-D and E-F-G. Unlike the methodology represented in Figure 8, in this case there is no overlaying of thread during formation of one and the same layer of the panel. Figure 9 shows gaps between the points B and D and between the points E and G, the dimensions of which have been exaggerated for convenience of representation of the path followed. In practice, these gaps are closed. In this case, the dispensing head then follows again same path in the opposite direction after it has been raised in height in order to form the next layer. A first advantage of the methodology represented in Figure 9 as compared to the one represented in Figure 7 has already been described for the method illustrated in Figure 8 and consists, that is, in the possibility of providing lighter structures, with walls of the shell that are thinner. Moreover, also in this case, it is possible to keep the threads deposited relatively hotter than in the case of the pieces produced using the method represented in Figure 7, and improve the final mechanical characteristics of strength of the pieces. The method represented in Figure 9, as compared to the method illustrated in Figure 8, presents the main advantage of eliminating, at least potentially, the problem of the concavities localized on the outer face of the shell and of reducing the problem of accumulation of deposited material at the intersection between paths at the same height along Z. In the method illustrated in Figure 9, it should on the other hand be taken into account that the welds at the gaps B, D and E, G may be weaker than what it is possible to achieve using the method represented in Figure 8. Moreover, the sharp reversals of direction in the movement of the dispensing head 1 at the points B, D, and G may render more complex the system of control of movement of the dispensing head 1.

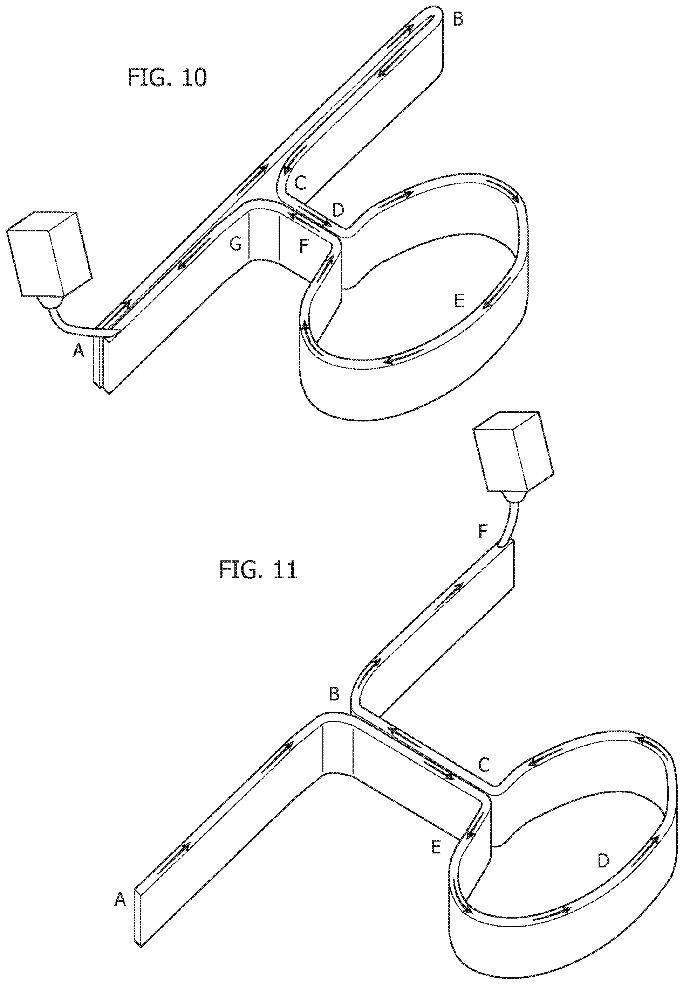

Figure 10 shows a further example of technique of the type illustrated in Figure 7, where the dispensing head moves according to a closed-loop path. In this case, the dispensing head covers a first stretch from A to B that defines the smooth outer surface of the structure, and then returns from B to A remaining adjacent to the stretch already deposited, except where it moves away therefrom in a central area of the panel according to the path C-D-E-F-G illustrated in Figure 10, configured in such a way as to define a flat stem that widens then into a hollow rib.

Figure 11 shows an example in which a configuration is obtained similar to the one represented in Figure 10, but with a technique of the same type as the one represented in Figure 8. In this case, the path of the dispensing head 1 to define each layer develops from point A to point B, then defines a loop according to the path C-D-E, and then runs adjacent to itself up to point B and finally reaches point F. The next layer is formed with a reverse movement of the dispensing head.

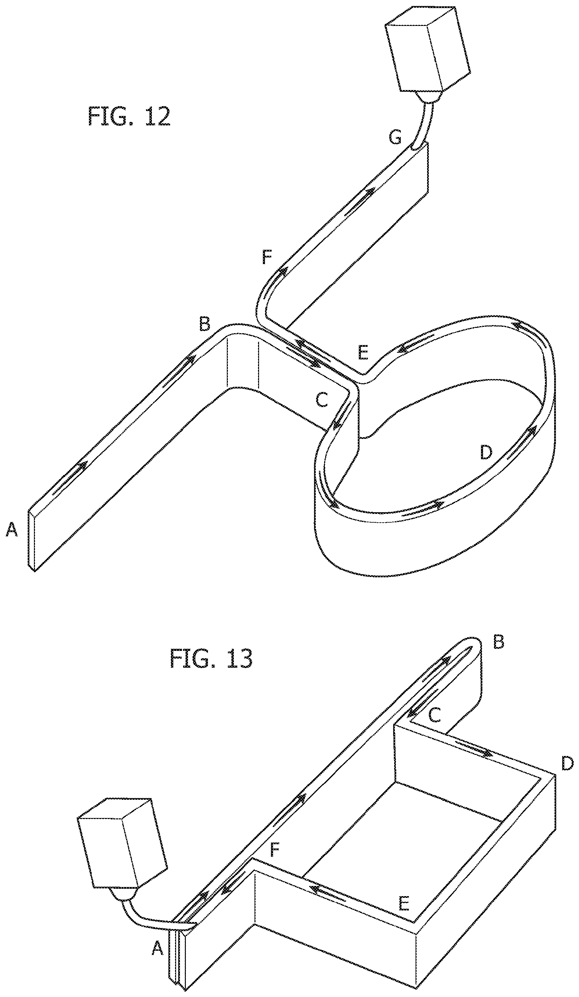

Figure 12 shows once again a structure having the configuration similar to the one represented in Figures 10 and 11, but obtained with a technique of the same type as the one illustrated in Figure 9, with a movement of the dispensing head according to the path A-B-C-D-E-F-G. Also in this case, the next layer is obtained with a reverse path of the dispensing head.

Figure 13 shows a further example in which the technique illustrated in Figure 7 is used to provide a different structural geometry, with a stiffening rib of large dimensions and with quadrangular section. Each layer is formed with a closed-loop movement of the dispensing head 1 according to a path A-B-C-D-E-F-A.

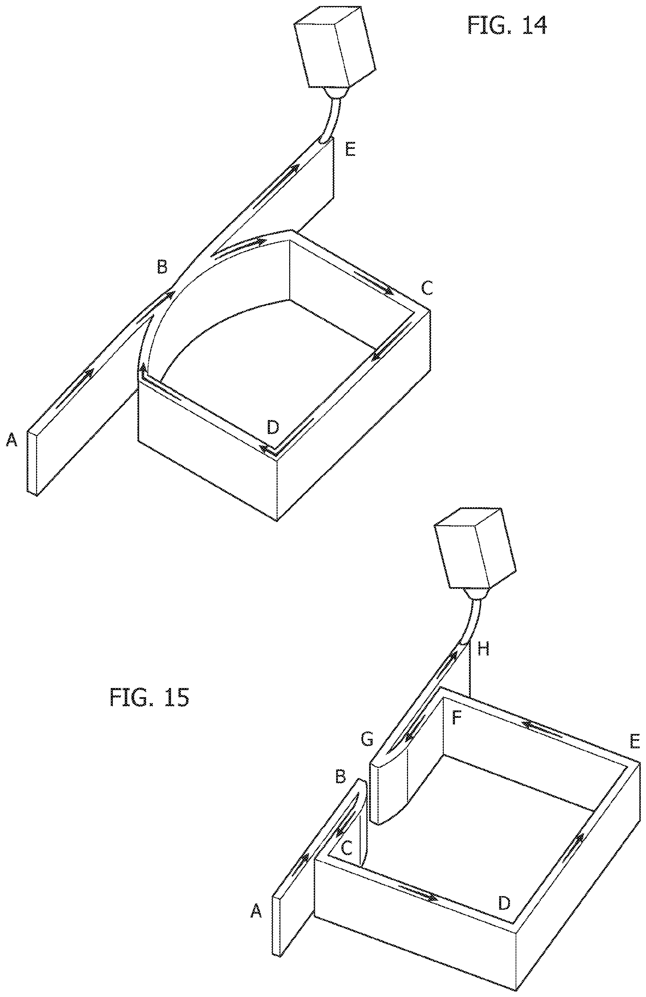

Figure 14 shows a further example of structure that can be obtained using the same method as the one represented in Figure 8, where each layer is formed with a movement of the dispensing head that goes from an end A to an end E, passing through the points B, C, D (loop-shaped conformation and overlaying of the thread at point B). The next layer is obtained with a movement of the dispensing head in the reverse direction.

Figure 15 is yet a further example of technique of the type represented in Figure 9 to provide a different geometry of the structure.

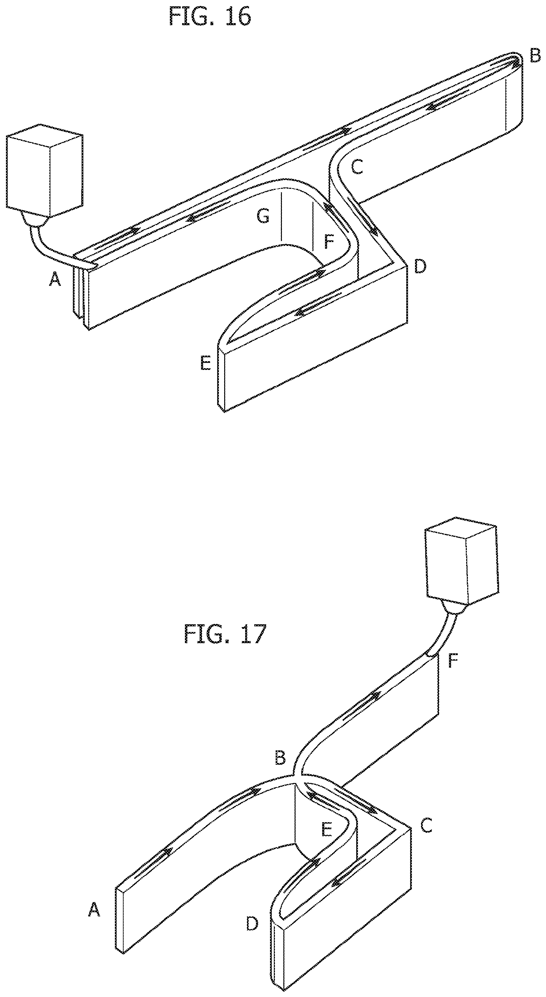

Figures 16, 17, 18 once again show examples of application of the techniques represented in Figures 7, 8, 9 to provide a structure in which the stiffening rib has an L-shaped configuration, with a first stretch projecting from the central portion of the panel and a second stretch orthogonal to the first stretch and projecting in cantilever fashion therefrom.

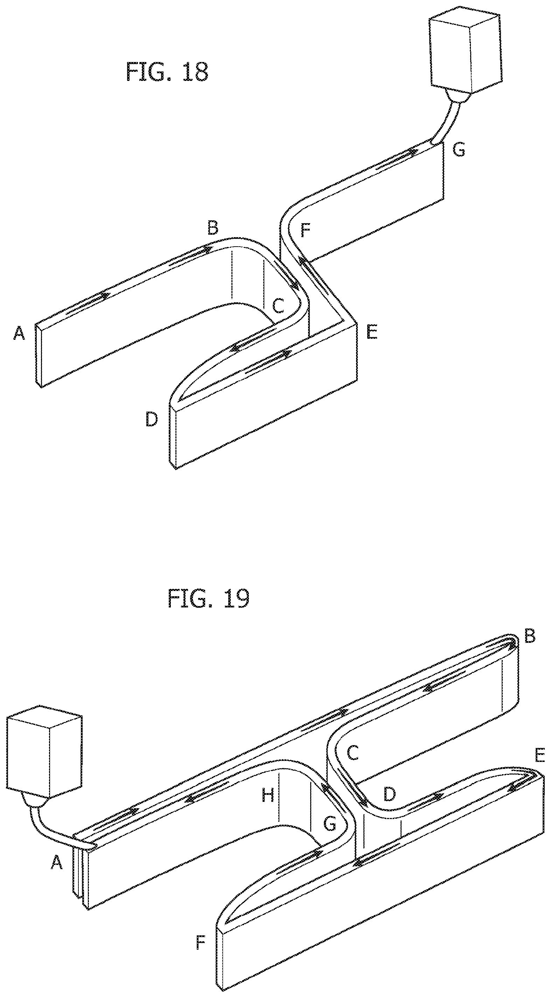

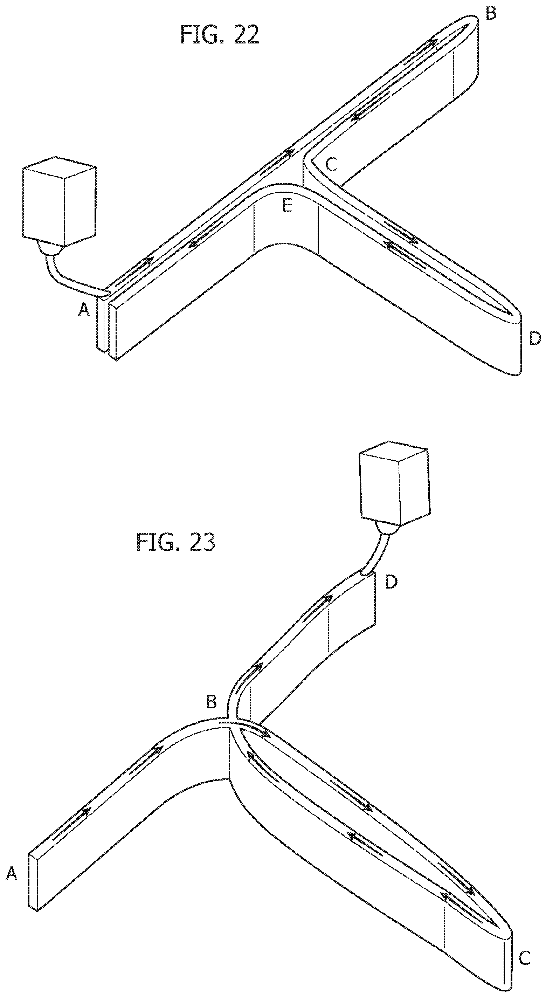

Further examples of application of the techniques represented in Figures 7, 8, 9 are illustrated in Figures 19, 20, 21, 22, 23, 24 with reference to structures in which the stiffening rib has a T shape (Figures 19-21) or is in the form of a single fin orthogonal to the main body of the panel (Figures 22-24).

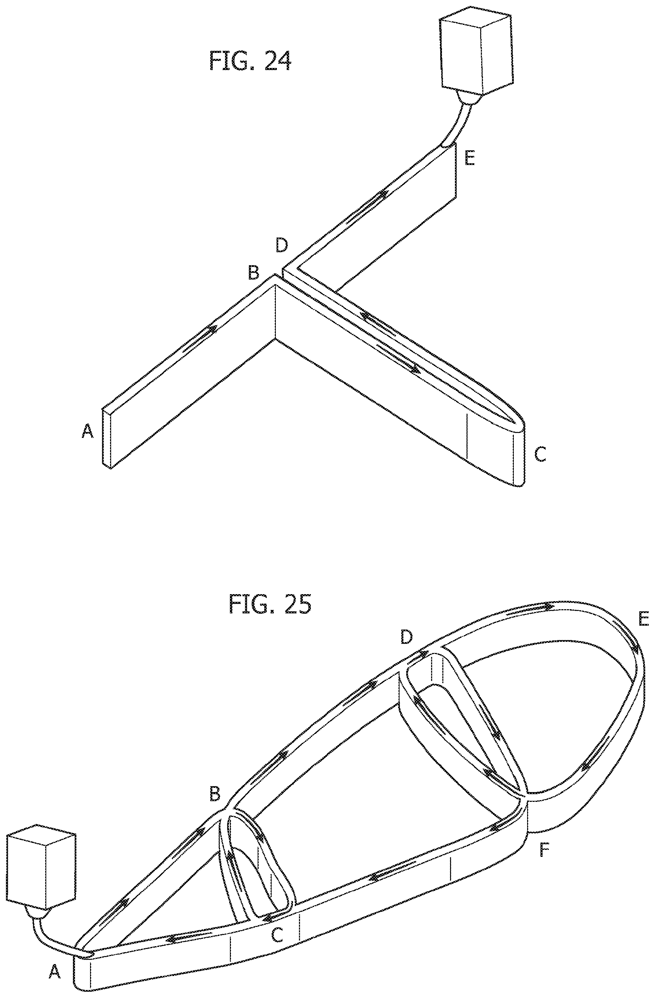

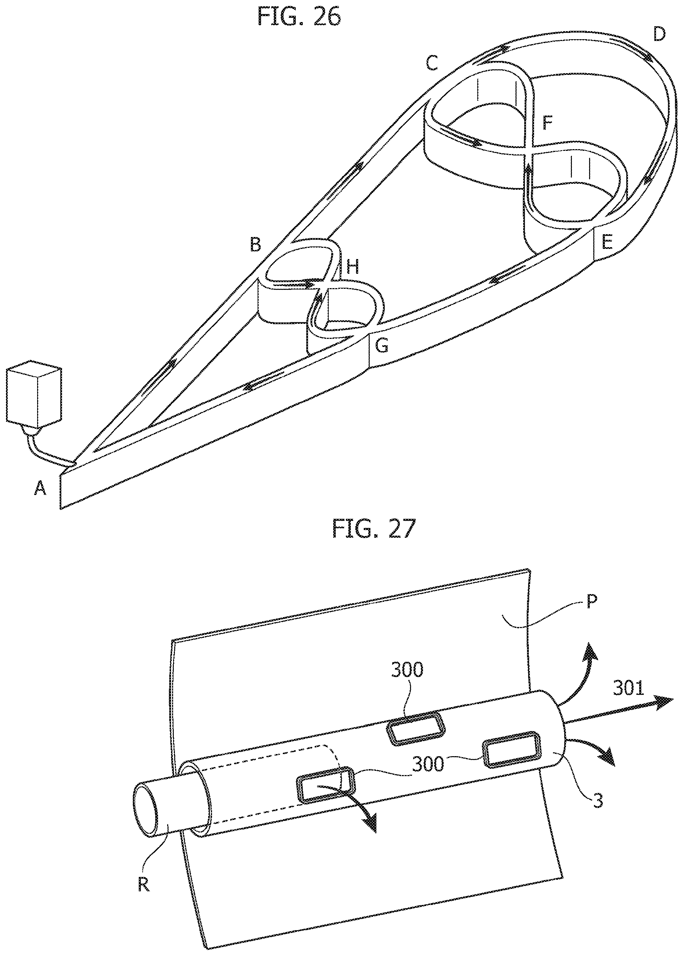

Figures 25 and 26 show examples of embodiment of the method according to the invention to provide wing elements or tails of aircraft or also turbine blades (for example, wind rotor blades). Figure 25 shows an example of application of the technique represented in Figure 8 (path with the formation of loops and overlaying of the thread at the base of each loop): the dispensing head defines each layer following the path A-B-C-D-E-F-D-F-C-A. Figure 26 shows an alternative method in which the head follows the path A-B-C-D-E-F-E-G-H-G-A.

In either case, a structure of wing or tail or propeller blade made of a single piece is obtained including an outer shell and inner supporting and stiffening members or ribs

The cavities 30 of the stiffening ribs 3 can be used for one or more different purposes.

With reference to Figure 27, at least some of the hollow stiffening ribs 3 can be filled with resin R, for example epoxy resin that is injected into the cavities of the ribs possibly with the aid of a suction line 301 connected to a suction pressure source. For this purpose, the walls of the ribs 3 may present openings 300 that enable progressive exit of the resin, from the inside of the cavities of the ribs towards the outside, in such a way as to coat the outer surface of the ribs and the inner face of the panel P constituting the shell-like structure. This process can be obtained with the so-called vacuum-bagging technique.

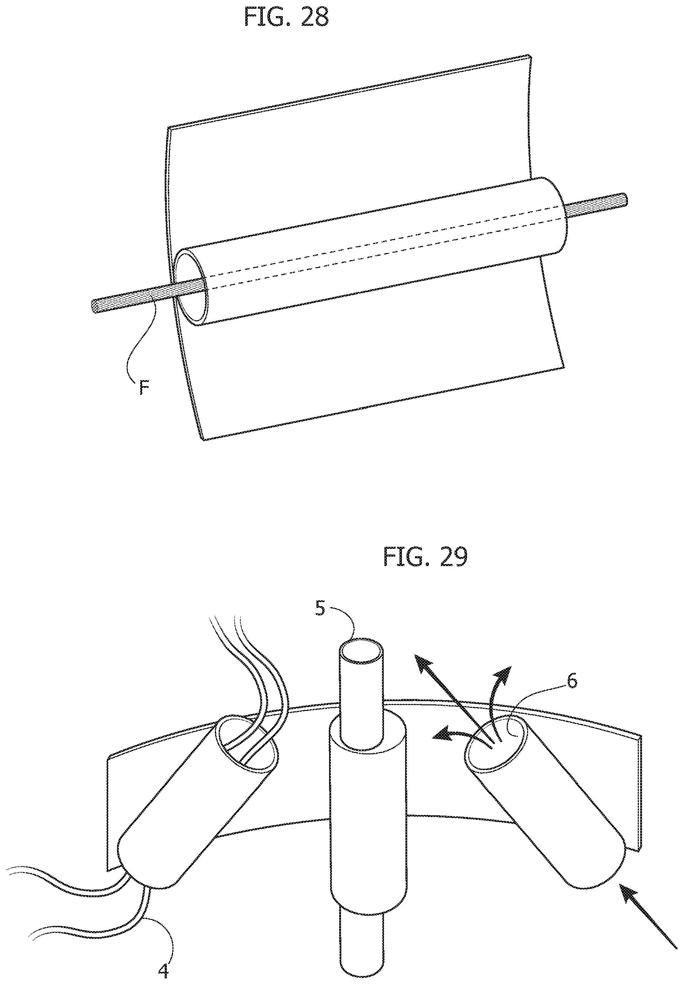

The hollow ribs 3 can also be used (as an alternative or in addition to the arrangement referred to above) to introduce reinforcement fibres F (Figure 28) after the panels P constituting the shell-like structure have been assembled together.

According to a further arrangement, the cavities of the stiffening ribs 3 can be used for the passage of electric cables 4 or hydraulic service ducts 5, or as ventilation ducts 6 (Figure 29). This application is interesting from the practical standpoint in the case where the shell-like structures are used, for example, to produce hulls or other watercraft components, where the panels constituting the shell-like structure can be equipped with auxiliary elements, such as furnishing elements.

Finally, the hollow ribs 3 may also be used to facilitate alignment and assembly of different panels P that constitute the shell-like structure. For this purpose, it is possible to provide engagement elements, possibly also obtained simultaneously with formation of the panels, which are inserted into the cavities of the ribs to connect the panels P together.

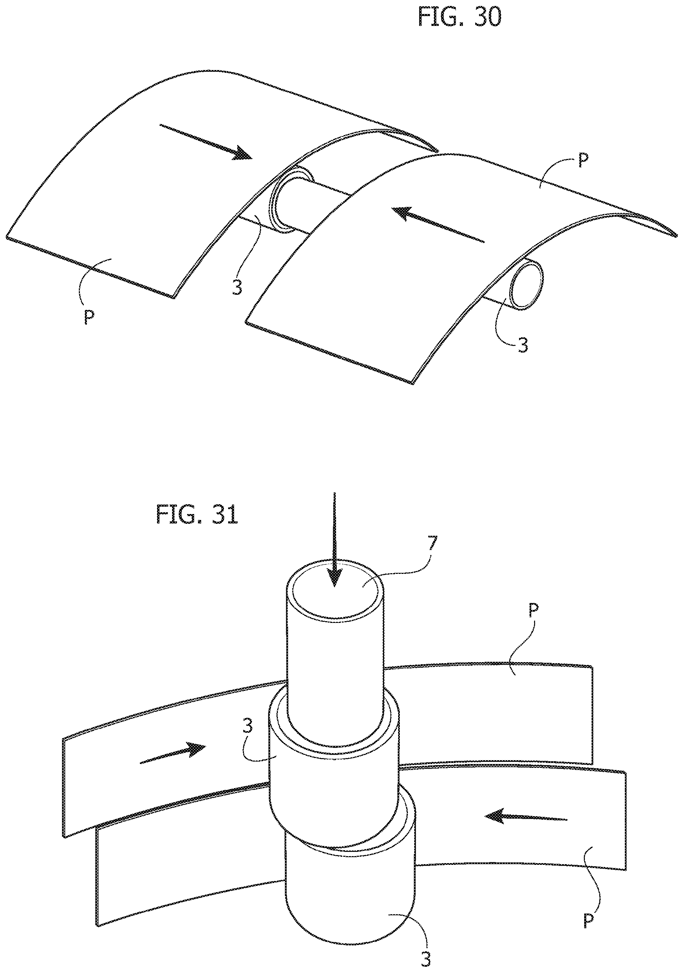

By way of example, Figure 30 shows two panels P with stiffening ribs 3 of different diameter that are inserted into one another to provide connection between the panels. As may be seen, it is the rib itself of one of the panels that functions as engagement element to be inserted into the hollow rib of the other panel. Figure 31 illustrates, instead, the case of two panels P that are coupled together by insertion of a cylindrical engagement element 7, into the hollow ribs 3 of both of the panels P.

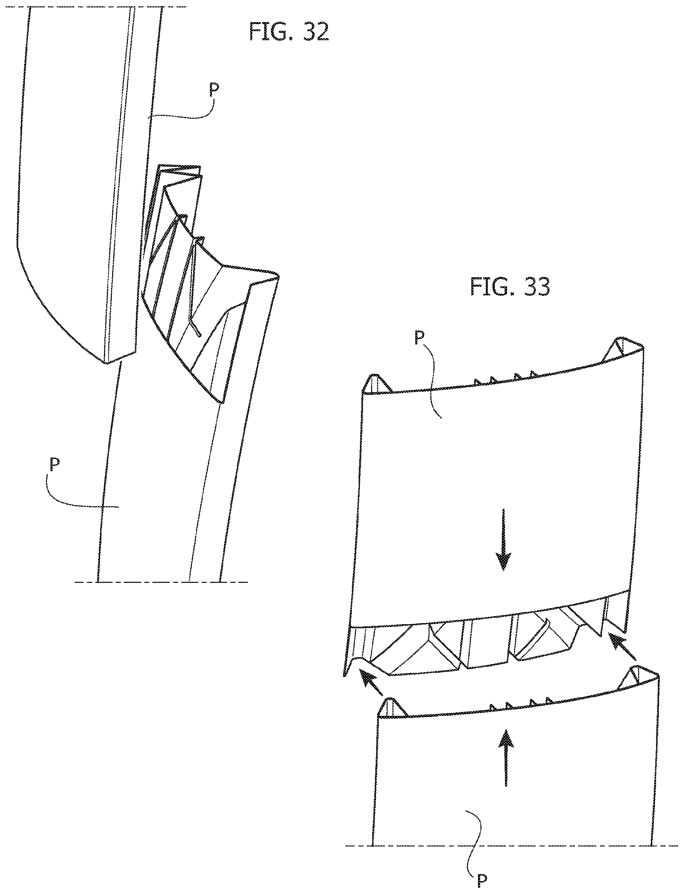

Assembly of the panels that constitute the shell-like structure can also be obtained by forming the panels with mutual-engagement portions, as illustrated in Figures 32 and 33. The panels can be rigidly connected together, for example by gluing or welding or riveting or by means of threaded joints. Thanks to the aforesaid techniques, large gluing surfaces are obtained, which guarantee a perfect assemblage of the different panels together.

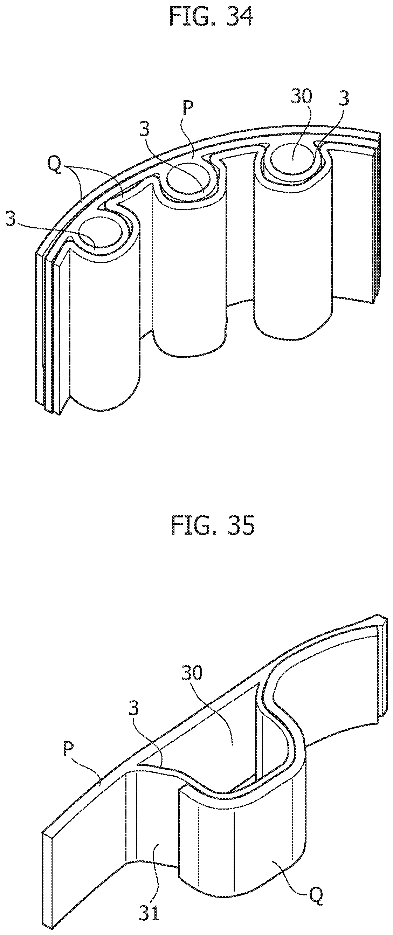

With reference to Figure 34, one or more of the aforesaid panels P, either singly or in the assembled condition, are used as cores of multilayer structures obtained by coating at least one of the faces of the panels P with a covering layer Q, for example made of plastic material or composite material. The coating can be applied with manual or automated procedures such as: hand lay-up, prepreg, or vacuum processing and fibre placement. In the example represented in Figure 34, the panel P is of the type having hollow stiffening ribs 3, with cavities 30, made of a single piece with the panel P during the additive-manufacturing operation. In this example, both of the faces of the panel P are coated with a covering layer Q.

Figure 35 shows an example in which, to favour adhesion of the covering layer Q (which in Figure 35 has in part been removed for greater clarity of illustration) on the face of the panel P bearing the ribs 3 the ribs are designed in such a way as to present a curved surface 31 connecting the rib to the corresponding face of the panel.

As emerges clearly from the foregoing description, the method according to the invention enables shell-like supporting structures to be obtained formed by panels with relatively thin walls, which are very light and notwithstanding this present the necessary characteristics of strength, thanks to the provision of the stiffening ribs on the inner face of the panels. As described above, in the preferred embodiments, the stiffening ribs are made hollow, simultaneously with forming of the panels, preferably using any one of the deposition techniques described above (in the case where FDM technology is adopted). In this way, it is possible to achieve the aforesaid characteristics of lightness and strength, at the same time guaranteeing that the outer surfaces of the shell-like structures thus obtained are characterized by smooth and fair curvatures. The method according to the invention enables structures of large dimensions to be obtained, if necessary by fitting the panels together via mutual engagement at engagement portions, obtained, for example, by the stiffening ribs themselves or by auxiliary elements, or again by accordingly shaped portions of the panels. As also already mentioned, the panels may be obtained using different materials, such as thermoplastic, composite, metal, or ceramic materials. The deposition techniques described herein (in the case of FDM technology) enable both optimization of the weights of the panels and increase of adhesion between the forming layers of the panels through a reduction of the thermal losses during deposition of the material. In further embodiments, one or more of the aforesaid panels, either singly or in the assembled condition, are used as cores of multilayer structures obtained by coating at least one of the faces of the panels with a covering layer, for example made of plastic material or composite material.

As already mentioned, constituting preferred examples of application of the method according to the invention are the shell-like structures for hulls of watercraft, or for aircraft structures, or also, for example, for propeller blades or wind rotor blades, or the like.

## Claims

1. A method for producing a shell-like supporting structure (S), such as the hull of a watercraft, or the shell of a wind rotor blade, the method comprising the steps of providing a number of panels (P) and connecting the panels (P) to each other to constitute the shell-like supporting structure (S),
wherein each panel (P) is formed using an additive-manufacturing technology,
said method being **characterized in that** each panel is made in the form of a relatively thin panel (P) with a lattice of stiffening ribs (3, 4) on one face of the panel (P),
wherein the aforesaid stiffening ribs (3, 4) of each panel (P) are made of a single piece with the panel (P), simultaneously with forming of the panel (P), by using FDM (Fused Deposition Modelling) technology,
wherein each panel (P) is formed layer by layer, each layer being formed by moving a dispensing head (1) so as to lay a continuous thread of material,
wherein at least some of the stiffening ribs (3) are made hollow, and
wherein the dispensing head (1) is moved continuously to obtain each layer of the panel (P):
- either according to a closed-loop path, which includes a forward stretch (AB) defining a smooth outer face of the panel (P) and a return stretch (BA) adjacent to the forward stretch (AB) and including undulations (CD) that define hollow ribs (3) on the inner face of the panel (P),
- or according to a path between two opposite ends, which is followed back and forth in the two directions to create the different layers of the panel, said path including loop-shaped stretches (BC, DE; BC, EF), which are defined with or without overlaying of the portions of thread corresponding to the start and end of each loop and give rise to said hollow ribs following upon superposition of the layers thus formed,
wherein the lattice of stiffening ribs comprises different dimensional orders of ribs, so as to define a lattice of ribs of a first order (3) and one or more lower orders of ribs (4), which have progressively decreasing dimensions.
wherein at least some of the ribs of the first order (3) are made hollow, and are used to engage within them elements of connection between the panels (P).

2. The method according to claim 1, **characterized in that** the cavities of the hollow stiffening ribs (3) are filled with additional reinforcement material (R), for example resin with reinforcement fibres, and/or are used for the passage of cables or service ducts or as ventilation ducts (4, 5, 6).

3. The method according to claim 1, **characterized in that** the aforesaid connection elements consist of:
- stiffening ribs (3) of one or more panels (P) configured and sized for being inserted into the cavities of further hollow stiffening ribs (3) of further panels (P); or else
- auxiliary engagement elements (7), which are engaged within respective hollow ribs (3) of the panels (P) that are to be connected together.

4. The method according to claim 1, **characterized in that** said panels (P) are formed with connection portions made of a single piece with the panels and configured for engaging in one another.

5. The method according to claim 1, **characterized in that** said panels are rigidly connected together, using a technique chosen from among gluing, welding, riveting, and threaded joints.

6. The method according to claim 1, **characterized in that** the panels (P) are made of materials chosen from among polymeric material, composite material, metal material, cementitious material, and ceramic material.

7. The method according to claim 1, **characterized in that** one or more of said panels (P), either singly or in the assembled condition, are used as cores of multilayer structures obtained by coating at least one of the faces of the panels (P) with a covering layer (Q), for example made of plastic material or composite material.

8. The method according to claim 7, **characterized in that**, in order to favour adhesion of the covering layer (Q) on the face of the panel (P) provided with the ribs (3), the ribs are designed in such a way as to present a curved surface (31) connecting each rib (3) to the corresponding face of the panel (P).

9. A watercraft hull (S), comprising a shell-like supporting structure formed by panels (P) connected together, which are obtained using the method of claim 1.

10. A wind rotor blade comprising a shell-like supporting structure formed by panels (P) connected together, which are obtained using the method of claim 1.

## Patentansprüche

1. Ein Verfahren zur Herstellung einer schalenartigen Tragstruktur (S), wie dem Rumpf eines Wasserfahrzeugs oder der Schale eines Windrotorblatts, wobei das Verfahren die Schritte des Bereitstellens einer Anzahl von Paneelen (P) und des Verbindens der Paneele (P) miteinander umfasst, um die schalenartige Tragstruktur (S) zu bilden,
wobei jedes Paneel (P) unter Verwendung einer additiven Fertigungstechnologie geformt wird,
wobei das genannte Verfahren **dadurch gekennzeichnet ist, dass** jedes Paneel in Form eines relativ dünnen Paneels (P) mit einem Gitter aus Versteifungsrippen (3, 4) auf einer Seite des Paneels (P) hergestellt wird,
wobei die vorgenannten Versteifungsrippen (3, 4) jedes Paneels (P) aus einem Stück mit dem Paneel (P) gefertigt werden, gleichzeitig mit der Formung des Paneels (P), durch Verwendung der FDM-Technologie (Fused Deposition Modelling),
wobei jedes Paneel (P) schichtweise geformt wird, wobei jede Schicht durch Bewegen eines Abgabekopfs (1) gebildet wird, um einen kontinuierlichen Materialfaden abzulegen,
wobei mindestens einige der Versteifungsrippen (3) hohl ausgeführt sind, und
wobei der Abgabekopf (1) kontinuierlich bewegt wird, um jede Schicht des Paneels (P) zu erhalten:
- entweder gemäß einem geschlossenen Schleifenweg, der einen Vorwärtsabschnitt (AB) umfasst, der eine glatte Außenfläche des Paneels (P) definiert, und einen Rückführungsabschnitt (BA) benachbart zum Vorwärtsabschnitt (AB), der Wellungen (CD) enthält, die hohlen Rippen (3) auf der Innenfläche des Paneels (P) definieren,
- oder gemäß einem Weg zwischen zwei gegenüberliegenden Enden, der hin und her in beiden Richtungen verfolgt wird, um die verschiedenen Schichten des Paneels zu erzeugen, wobei der genannte Weg schleifenförmige Abschnitte (BC, DE; BC, EF) enthält, die mit oder ohne Überlagerung der Fadenabschnitte entsprechend dem Start und Ende jeder Schleife definiert sind und zu den besagten hohlen Rippen führen, die sich aus der Überlagerung der so gebildeten Schichten ergeben,
wobei das Gitter aus Versteifungsrippen verschiedene Dimensionierungsordnungen von Rippen umfasst, um ein Gitter aus Rippen erster Ordnung (3) und eine oder mehrere niedrigere Ordnungen von Rippen (4) zu definieren, die progressiv abnehmende Abmessungen aufweisen,
wobei mindestens einige der Rippen der ersten Ordnung (3) hohl ausgeführt sind und verwendet werden, um in ihnen Verbindungselemente zwischen den Paneelen (P) aufzunehmen.

2. Das Verfahren nach Anspruch 1, **dadurch gekennzeichnet, dass** die Hohlräume der hohlen Versteifungsrippen (3) mit zusätzlichem Verstärkungsmaterial (R) gefüllt sind, beispielsweise Harz mit Verstärkungsfasern, und/oder für den Durchgang von Kabeln oder Versorgungsleitungen oder als Belüftungskanäle (4, 5, 6) verwendet werden.

3. Das Verfahren nach Anspruch 1, **dadurch gekennzeichnet, dass** die vorgenannten Verbindungselemente bestehen aus:
- Versteifungsrippen (3) eines oder mehrerer Paneele (P), die konfiguriert und bemessen sind, um in die Hohlräume weiterer hohler Versteifungsrippen (3) weiterer Paneele (P) eingefügt zu werden; oder alternativ
- Hilfseingriffselementen (7), die innerhalb jeweiliger hohler Rippen (3) der Paneele (P), die miteinander verbunden werden sollen, eingerastet sind.

4. Das Verfahren nach Anspruch 1, **dadurch gekennzeichnet, dass** die genannten Paneele (P) mit Verbindungsabschnitten geformt werden, die aus einem Stück mit den Paneelen bestehen und zum Ineinandergreifen konfiguriert sind.

5. Das Verfahren nach Anspruch 1, **dadurch gekennzeichnet, dass** die genannten Paneele starr miteinander verbunden werden, unter Verwendung einer Technik, die aus Kleben, Schweißen, Nieten und Gewindeverbindungen ausgewählt ist.

6. Das Verfahren nach Anspruch 1, **dadurch gekennzeichnet, dass** die Paneele (P) aus Materialien hergestellt sind, die aus Polymerwerkstoff, Verbundwerkstoff, Metallwerkstoff, zementgebundenem Werkstoff und keramischem Werkstoff ausgewählt sind.

7. Das Verfahren nach Anspruch 1, **dadurch gekennzeichnet, dass** eines oder mehrere der genannten Paneele (P), entweder einzeln oder im montierten Zustand, als Kerne von Mehrschichtstrukturen verwendet werden, die durch Beschichten mindestens einer der Flächen der Paneele (P) mit einer Deckschicht (Q) erhalten werden, beispielsweise aus Kunststoff oder Verbundwerkstoff.

8. Das Verfahren nach Anspruch 7, **dadurch gekennzeichnet, dass**, um die Haftung der Deckschicht (Q) auf der mit den Rippen (3) versehenen Fläche des Paneels (P) zu begünstigen, die Rippen so ausgelegt sind, dass sie eine gekrümmte Oberfläche (31) aufweisen, die jede Rippe (3) mit der entsprechenden Fläche des Paneels (P) verbindet.

9. Ein Wasserfahrzeugrumpf (S), umfassend eine schalenartige Tragstruktur, die durch miteinander verbundene Paneele (P) gebildet wird, die unter Verwendung des Verfahrens nach Anspruch 1 erhalten werden.

10. Ein Windrotorblatt, umfassend eine schalenartige Tragstruktur, die durch miteinander verbundene Paneele (P) gebildet wird, die unter Verwendung des Verfahrens nach Anspruch 1 erhalten werden.

## Revendications

1. Procédé pour produire une structure de support en forme de coque (S), telle que la coque d'un navire, ou la carène d'une pale de rotor éolien, le procédé comprenant les étapes consistant à fournir un certain nombre de panneaux (P) et à connecter les panneaux (P) les uns aux autres pour constituer la structure de support en forme de coque (S),
dans lequel chaque panneau (P) est formé en utilisant une technologie de fabrication additive,
ledit procédé étant **caractérisé en ce que** chaque panneau est réalisé sous la forme d'un panneau relativement mince (P) avec un treillis de nervures de raidissement (3, 4) sur une face du panneau (P),
dans lequel lesdites nervures de raidissement (3, 4) de chaque panneau (P) sont réalisées d'une seule pièce avec le panneau (P), simultanément à la formation du panneau (P), en utilisant la technologie FDM (Fused Deposition Modelling),
dans lequel chaque panneau (P) est formé couche par couche, chaque couche étant formée en déplaçant une tête de distribution (1) de manière à déposer un fil continu de matériau,
dans lequel au moins certaines des nervures de raidissement (3) sont réalisées creuses, et
dans lequel la tête de distribution (1) est déplacée de manière continue pour obtenir chaque couche du panneau (P) :
- soit selon un trajet en boucle fermée, qui comprend une portion aller (AB) définissant une face externe lisse du panneau (P) et une portion retour (BA) adjacente à la portion aller (AB) et comprenant des ondulations (CD) qui définissent des nervures creuses (3) sur la face interne du panneau (P),
- soit selon un trajet entre deux extrémités opposées, qui est suivi en aller-retour dans les deux directions pour créer les différentes couches du panneau, ledit trajet comprenant des portions en forme de boucle (BC, DE ; BC, EF), qui sont définies avec ou sans superposition des portions de fil correspondant au début et à la fin de chaque boucle et donnent naissance auxdites nervures creuses suite à la superposition des couches ainsi formées,
dans lequel le treillis de nervures de raidissement comprend différents ordres dimensionnels de nervures, de manière à définir un treillis de nervures de premier ordre (3) et un ou plusieurs ordres inférieurs de nervures (4), qui ont des dimensions progressivement décroissantes, dans lequel au moins certaines des nervures du premier ordre (3) sont réalisées creuses, et sont utilisées pour y loger des éléments de connexion entre les panneaux (P).

2. Procédé selon la revendication 1, **caractérisé en ce que** les cavités des nervures de raidissement creuses (3) sont remplies d'un matériau de renfort supplémentaire (R), par exemple une résine avec des fibres de renfort, et/ou sont utilisées pour le passage de câbles ou de conduits de service ou comme conduits de ventilation (4, 5, 6).

3. Procédé selon la revendication 1, **caractérisé en ce que** lesdits éléments de connexion consistent en :
- des nervures de raidissement (3) d'un ou plusieurs panneaux (P) configurées et dimensionnées pour être insérées dans les cavités d'autres nervures de raidissement creuses (3) d'autres panneaux (P) ; ou bien
- des éléments d'engagement auxiliaires (7), qui sont engagés à l'intérieur de nervures creuses respectives (3) des panneaux (P) qui doivent être connectés ensemble.

4. Procédé selon la revendication 1, **caractérisé en ce que** lesdits panneaux (P) sont formés avec des portions de connexion réalisées d'une seule pièce avec les panneaux et configurées pour s'engager les unes dans les autres.

5. Procédé selon la revendication 1, **caractérisé en ce que** lesdits panneaux sont rigidement connectés ensemble, en utilisant une technique choisie parmi le collage, le soudage, le rivetage et les assemblages filetés.

6. Procédé selon la revendication 1, **caractérisé en ce que** les panneaux (P) sont réalisés en matériaux choisis parmi un matériau polymère, un matériau composite, un matériau métallique, un matériau cimentaire et un matériau céramique.

7. Procédé selon la revendication 1, **caractérisé en ce qu'**un ou plusieurs desdits panneaux (P), individuellement ou dans leur condition assemblée, sont utilisés comme noyaux de structures multicouches obtenues en recouvrant au moins l'une des faces des panneaux (P) avec une couche de revêtement (Q), par exemple en matériau plastique ou en matériau composite.

8. Procédé selon la revendication 7, **caractérisé en ce que**, pour favoriser l'adhésion de la couche de revêtement (Q) sur la face du panneau (P) pourvue des nervures (3), les nervures sont conçues de manière à présenter une surface courbe (31) reliant chaque nervure (3) à la face correspondante du panneau (P).

9. Coque de navire (S), comprenant une structure de support en forme de coque formée par des panneaux (P) connectés ensemble, qui sont obtenus en utilisant le procédé de la revendication 1.

10. Pale de rotor éolien comprenant une structure de support en forme de coque formée par des panneaux (P) connectés ensemble, qui sont obtenus en utilisant le procédé de la revendication 1.
